# EUROPÄISCHE PATENTSCHRIFT

(11) **EP 0 465 938 B1**
(45) Veröffentlichungstag und Bekanntmachung des Hinweises auf die Patenterteilung: **01.12.1993**
(21) Anmeldenummer: 91110633.4
(22) Anmeldetag: 27.06.1991
(51) Int. Cl.: F01N 3/02

(54) **Abgasfilter**
Exhaust filter
Filtre d'échappement

(30) Priorität: 05.07.1990 DE 4021495
(43) Veröffentlichungstag der Anmeldung: 15.01.1992
(73) Patentinhaber: Schwäbische Hüttenwerke Gesellschaft mit beschränkter Haftung, D-73414 Aalen (DE); MERCEDES-BENZ AG, 70327 Stuttgart (DE)
(72) Erfinder: Härle, Hans A., Dipl.-Ing., W-7085 Bopfingen (DE); Langer, Hans Joachim, Dipl.-Ing., W-7148 Remseck 3 (DE)
(74) Vertreter: Lorenz, Werner, Dipl.-Ing.

(56) Entgegenhaltungen:
- EP-A- 0 313 922
- EP-A- 0 356 040
- FR-A- 1 026 066
- US-A- 4 257 225
- US-A- 4 558 565

## Beschreibung

Die Erfindung betrifft einen Abgasfilter, insbesondere Rußfilter für einen Dieselmotor, mit einem in einem Gehäuse angeordneten und von den zu reinigenden Abgasen durchströmten Filterkörper, mit einem Eingangskanal und einem Ausgangskanal, wobei zwischen dem Eingangskanal und dem Ausgangskanal ein oder mehrere an dem Filterkörper vorbeiführende Nebenleitungen angeordnet sind, die an ihren beiden Enden jeweils über Öffnungen mit dem Eingangskanal bzw. Ausgangskanal verbunden sind.

In der DE-OS 38 18 281 ist ein Abgasfilter aus Sintermetall beschrieben. Besonders vorteilhaft läßt sich ein derartiger Filter zur Entfernung von Ruß und rußähnlichen Stoffen aus einem Verbrennungsmotor, insbesondere einem Dieselmotor, verwenden.

Weitere Einsatzgebiete sind Verbrennungsanlagen in privaten, gewerblichen oder in öffentlichen Haushalten.

Besonders vorteilhaft läßt sich als Filterkörper ein aus ein oder mehreren formgepreßten, hochtemperaturbeständigen Sinterteilen bestehender Filterkörper verwenden. Ein derartiger Filterkörper besitzt einen hohen Wirkungsgrad bei einer gleichzeitig hohen Wärmeleitfähigkeit, wobei zum Teil sogar katalytische Wirkungen eintreten. Dies ist insbesondere dann der Fall, wenn man dem Filterkörper mit katalytisch wirkenden Werkstoffen, wie z.B. Platin, Rhodium, Vanadium und dergl. beschichtet.

Nachteilig bei den bekannten Abgasfiltern ist, daß der Gasgegendruck in dem Filter in Abhängigkeit von der Filterbeladung stark schwanken kann. Damit ergeben sich auch entsprechende Schwankungen im Wirkungsgrad, insbesondere im Abscheidegrad von Verunreinigungen. So stellt z.B. bei einem unbeladenen oder nur wenig beladenen Filter, d.h. bei einem neuen oder gereinigten Filter, nur ein relativ geringer Gegendruck ein, wodurch eine relativ schnelle Durchströmung des Filterkörpers stattfindet.

Umgekehrt, wenn der Filter bereits hochbeladen ist, liegt ein hoher Gasgegendruck vor. Dies bedeutet, daß zum Durchströmen des Filterkörpers ein entsprechend hoher Widerstand zu überwinden ist, worunter unter anderem auch die Motorleistung bei einem Einsatz des Abgasfilters in einem Verbrennungsmotor leidet.

Aus der US-A 4 257 225 ist ein Verfahren und eine Vorrichtung zur Entfernung von Ruß aus einem Dieselmotor beschrieben, wobei zwischen dem Eingangskanal und dem Ausgangskanal eines Filters eine an dem Filterkörper vorbeiführende Nebenleitung angeordnet ist. In der Nebenleitung ist ein Gebläse oder ein kleiner Kompressor angeordnet, der einen Differenzdruck zwischen der Ausgangsöffnung und der Eingangsöffnung und eine Rückführung von bereits gereinigtem Abgas zur Eingangsseite erzeugen soll. Zusätzlich sind Ventile vorgesehen, durch die der Gasstrom über die Nebenleitung geregelt werden soll. Diese bekannte Nebenleitung hat die Aufgabe, die Brennrate im Filter zu reduzieren.

Der vorliegenden Erfindung liegt daher die Aufgabe zugrunde, einen Abgasfilter zu schaffen, durch den die vorstehend erwähnten Nachteile vermieden werden, insbesondere dessen Wirkungsgrad gleichmäßiger bzw. besser wird.

Erfindungsgemäß wird diese Aufgabe durch die im kennzeichnenden Teil von Anspruch 1 genannten Merkmale gelöst.

Der oder die erfindungsgemäßen Nebenleitungen haben einen unerwarteten Effekt auf den Gasdruck in dem Filter und damit auf die Durchströmungsgeschwindigkeit der Abgase.

Im unbeladenen oder wenig beladenen Zustand des Filterkörpers, d.h. wenn der Durchströmung der Abgase nur ein relativ geringer Widerstand entgegengestellt wird, liegt am Ausgangskanal ein Gasdruck an, der z.B. bei einer Ausgestaltung des Eingangskanales mit sich erweiternder Form und einem Ausgangskanal mit sich verengender Form höher ist als der im Bereich des Eingangskanales. So lange nun die Geschwindigkeit der einströmenden Abgase im Eingangskanal im Bereich der Einlaßöffnungen in den Nebenleitungen höher ist und damit auch der Druck an dieser Stelle niedriger ist als die Ausströmgeschwindigkeit der gereinigten Abgase im Bereich der Öffnungen in die Nebenleitungen im Ausgangskanal und damit auch der Druck dort entsprechend höher ist, stellt sich in den Nebenleitungen eine Rückströmung zur Eingangsseite des Abgasfilters ein. Dies bedeutet, vom Ausgangskanal aus wird ein Teil des Abgases wieder zum Eingangskanal zurückgeführt.

Die durch die Nebenleitungen rückströmenden Abgase sorgen für eine Vergleichmäßigung des gesamten Abgasstromes. Ein weiterer Vorteil besteht darin, daß ggf. nochmals eine Nachreinigung eines Teiles des gereinigten Abgases durch die nochmalige Durchleitung durch den Filterkörper erfolgt.

Mit zunehmender Beladung des Filterkörpers werden die Strömungsgeschwindigkeiten und damit auch die Druckunterschiede in den genannten Bereichen zwischen dem Eingangskanal und dem Ausgangskanal geringer werden und ab einem bestimmten Beladungszustand findet keine Rückströmung über die Nebenleitungen mehr statt. Wird dann der Beladungszustand des Filterkörpers noch höher, so strömt ein Teil des Abgases ungefiltert über die Nebenleitungen ab und vermindert damit den Abscheidegrad. Dieser Zustand wird erreicht, wenn aufgrund des höheren Widerstandes in dem Filterkörper der Druck vor dem Filterkörper höher ist als der Druck in dem Ausgangskanal im Bereich der Öffnungen in die Nebenleitungen.

Durch eine entsprechende Wahl der Querschnittsverhältnisse in den Kanälen und den Nebenleitungen läßt sich damit der Gasdruck vor dem Filter und damit auch der Abscheidegrad und die Strömungsrichtung durch die Nebenleitungen entsprechend wählen.

Selbstverständlich wird man im allgemeinen dafür sorgen, daß auch bei einer Durchströmung von ungefilterten Abgasen durch die Nebenleitungen der Filterwirkungsgrad noch so hoch ist, daß die geforderten Abgasgesetze- und bestimmungen eingehalten sind.

Dadurch daß zu hohe Gasdrücke vor dem Filter im hochbeladenen Filterzustand vermieden werden, werden auch negative Auswirkungen auf die Motorleistung vermieden.

Als weiteres sehr überraschendes Ergebnis durch die erfindungsgemäße Ausgestaltung mit Nebenleitungen hat sich gezeigt, daß das Wärmeverhalten des Abgasfilters dadurch besser geworden ist. So stellt sich eine höhere Wärme im Filterkörper und gleichmäßigere Wärmeverteilung ein.

Durch die Abgase, welche durch die Nebenleitungen strömen, wird praktisch eine Art Wärmemantel für den Filterkörper geschaffen. Dies ist insbesondere dann der Fall, wenn die Nebenleitungen um den Filterkörper herum angeordnet sind und sich z.B. zwischen dem Filterkörper und dem diesen umgebenen Gehäuse befinden.

Untersuchungen haben dabei gezeigt, daß auf diese Weise aufgrund der geringeren Gasgeschwindigkeit und besseren Temperaturverteilung gleichzeitig auch die Konversionstemperatur, d.h. die Temperatur, bei der die Rußverbrennung bzw. Rußumwandlung einsetzt, von 380°C auf ca. 320°C absinkt.

Durch eine geeignete Anordnung der Nebenleitungen um den Filterkörper läßt sich die vorteilhafte Wirkung noch weiter erhöhen.

So kann z.B., die Nebenleitung als Ringleitung zwischen dem Filterkörper und dem diesen umgebenen Gehäuse ausgebildet sein.

Als Filterkörper sind die verschiedensten Materialien möglich. Eine sehr vorteilhafte Kombination der erfindungsgemäßen Ausgestaltung eines Abgasfilters mit Nebenleitungen weist einen Filterkörper auf, der aus einem Gewebe, Geflecht oder Gewirk von miteinander versinterten Metallfasern und/oder Metallpulver gebildet ist, wobei in dem Filterkörper eine Vielzahl von Einlaßkanälen und Auslaßkanälen mit dazwischenliegenden Filterflächen gebildet ist.

Ein derartiger Filterkörper besteht aus einer Vielzahl von Filterflächen und hat einen hohen Wirkungsgrad.

Für die gewünschte Druckregelung, d.h. die Reduzierung der Geschwindigkeit der in den Abgasfilter einströmenden Abgase und die Druckerhöhung vor dem Filterkörper wird man im allgmeinen den Eingangskanal als Diffusor ausbilden. In gleicher Weise wird man zum Druckabbau und zur Erhöhung der Geschwindigkeit der Abgase, die den Filterkörper durchströmt haben, den Ausgangskanal trichterförmig bzw. düsenförmig verjüngen.

Um dabei die Wirkung der Nebenleitungen möglichst gut zu nutzen, wird man dabei vorsehen, daß sich die Öffnungen der Nebenleitung im Bereich des Beginnes des Diffusors und die Öffnung im Bereich der größeren Öffnungsweite des trichterförmigen Ausgangskanales befindet. Durch die Wahl der Positionen der Öffnungen in den beiden Kanälen lassen sich die Druck-/ und Geschwindigkeitsverhältnisse beliebig vorwählen.

Für eine optimale Anpassung an die jeweiligen Bedingungen kann man auch die Öffnungsweiten der Öffnungen in die Nebenleitung einstellbar ausführen. Bei einer entsprechenden Ausgestaltung der Stelleinrichtungen zur Einstellung der Öffnungsweite können ggf. auch nachträgliche Änderungen im Betrieb vorgenommen werden.

Nachfolgend ist ein Ausführungsbeispiel der Erfindung anhand der Zeichnung prinzipmäßig beschrieben.

Es zeigt:
- Fig. 1: den erfindungsgemäßen Abgasfilter schematisch im Längsschnitt;
- Fig. 2: eine Ausschnittsvergrößerung von "A" der Figur 1.

Der Abgasfilter ist grundsätzlich von bekannter Bauart, weshalb nachfolgend nur auf die für die Erfindung wesentlichen Teile näher eingegangen wird. Dies gilt insbesondere auch für den Aufbau eines Filterkörpers 1, der in einem Gehäuse 2 angeordnet ist.

Der Abgasfilter besitzt eine Zuleitung 3, die sich vor dem Filterkörper 1 durch einen Diffusor 4 trichterförmig bis auf den Durchmesser des Filterkörpers 1 erweitert. Hinter dem Filterkörper 1 verjüngt sich der Ausgangskanal 5 wieder düsen- bzw. trichterförmig. An den trichterförmigen Ausgangskanal 5 schließt sich ein Auslaß 6 an.

Um den Filterkörper 1 herum sind über den Umfang verteilt Nebenleitungen 7 angeordnet, die vor dem Filterkörper im Bereich des Überganges zwischen der Zuleitung 3 und dem Diffusor 4 beginnen und hinter dem Filterkörper 1 im Bereich der größten Öffnungsweite des trichterförmigen Ausgangskanales 5 enden. Die Nebenleitungen 7 verlaufen dabei im Bereich des Diffusors 4 außenseitig entlang der Diffusorwand. An beiden Enden der Nebenleitungen 7 sind Öffnungen 8 und 9 vorgesehen, die die Verbindung zu der Zuströmseite und zur Abströmseite der Abgase herstellen.

Statt einiger oder mehrerer oder den Umfang des Filterkörpers und des Diffusors 4 verteilten Nebenleitungen 7 kann im Bedarfsfalle auch eine Ringleitung vorgesehen sein. In einem derartigen Falle bildet die Außenwand des Filterkörpers 1 die Innenwand der Ringleitung, während die Außenwand der Ringleitung durch die Gehäusewand 2 gebildet ist. Zur Positionierung des Filterkörpers sind dann lediglich Verbindungsstege oder -rippen zur Gehäuseaußenwand vorhanden.

Selbstverständlich können die Nebenleitungen 7 jedoch auch in einfacher Weise um den Filterkörper bzw. das diesen umgebenenden Gehäuse angeordnet werden.

Nachfolgend wird die Funktionsweise der Nebenleitungen 7 näher beschrieben.
Im unbeladenen Zustand herrscht auf der Zuleitungsseite vor dem Filterkörper wegen des geringeren Widerstandes im Filterkörper eine höhere Strömungsgeschwindigkeit und ein niedrigerer Druck vor. Ausgangsseitig liegt in dem trichterförmigen Ausgangskanal im Bereich der Öffnungen 9 eine geringere Geschwindigkeit bzw. ein höherer Druck vor. Solange nun im Bereich der Öffnung 9 im Ausgangskanal 5 ein Druck p₃ herrscht, der höher ist als ein Druck p₁ im Bereich der Öffnungen 8 auf der Zulaufseite, findet eine Rückströmung von bereits gereinigten Abgasen durch die Nebenleitungen 7 in Pfeilrichtung statt. Der zurückströmende Teil des Abgasstromes wird damit der einströmenden Abgasstrommenge nochmals zugemischt.

Mit zunehmendem Beladungszustand des Filterkörpers baut sich auf der Zulaufseite im dem Diffusor 4 und in der Zuleitung 3 ein höherer Druck auf, womit die Druckdifferenz zwischen p₃ und p₁ geringer wird und damit auch die Rückströmgeschwindigkeit. Sobald p₁ = p₃ beträgt, wird die Rückströmung zu Null.

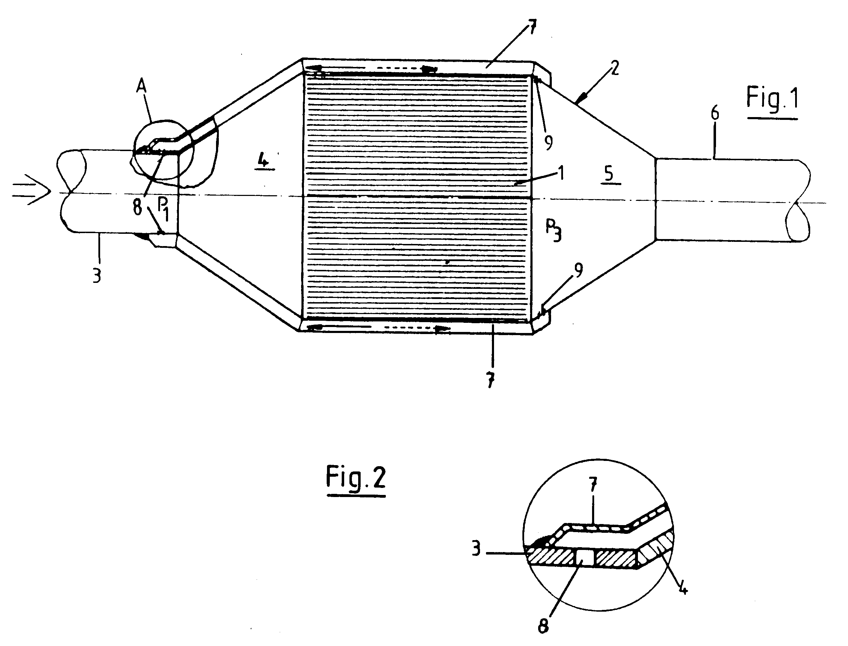

Wird nun in der Folge aufgrund einer noch höheren Beladung des Filterkörpers mit abgeschiedenen Verunreinigungen der Druck p₁ im Bereich der Öffnungen 8 größer als p₃ im Bereich der Öffnung 9, so findet eine Bypass-Strömung statt (siehe gestrichelte Pfeile in der Figur 1). Dies bedeutet, daß ein Teil des ungereinigten Abgases an dem Filterkörper 1 vorbeiströmt und ausgangsseitig in dem trichterförmigen Ausgangskanal 5 wieder beigemischt wird. Durch diese Ausgestaltung wird ein zu hoher Druckaufbau p₁ auf der Zulaufseite vermieden, wobei gleichzeitig die Abströmgeschwindigkeit durch den trichterförmigen Ausgangskanal 5 und die Ableitung 6 erhöht wird. Auf diese Weise stellt sich eine Vergleichmäßigung des Gasdruckes in dem Abgasfilter ein.

Im Bedarfsfalle können die Öffnungen 8 und/oder 9 durch nicht dargestellte Einstelleinrichtungen bezüglich ihrer Öffnungsweiten auch noch eingestellt bzw. im Bedarfsfalle nachträglich noch geändert werden.

Wie ersichtlich läßt sich durch die konstruktive Gestaltung des Diffusors 4, des trichterförmigen Ausgangskanales 5 der Nebenleitungen 7 und der Zu- und Ableitungen der Gasdruck vor und hinter dem Filterkörper und damit der Abscheidegrad im Filterkörper regeln, wobei nach dem Energieerhaltungssatz die hohe kinetische Gasgeschwindigkeit im Diffusor 4 in Druckenergie umgewandelt wird.

## Patentansprüche

1. Abgasfilter, insbesondere Rußfilter für einen Die selmotor, mit einem in einem Gehäuse (2) angeordneten und von den zu reinigenden Abgasen durchströmten Filterkörper (1), mit einem Eingangskanal (3,4) und einem Ausgangskanal (5,6), wobei zwischen dem Eingangskanal (3,4) und dem Ausgangskanal (5,6) ein oder mehrere an dem Filterkörper (1) vorbeiführende Nebenleitungen (7) angeordnet sind, die an ihren beiden Enden jeweils über Öffnungen (8,9) mit dem Eingangskanal (3,4) bzw. Ausgangskanal (5,6) verbunden sind,
**dadurch gekennzeichnet,** daß die Nebenleitung(en) (7) als Bypass-Leitung(en) derart ausgebildet sind, daß die Querschnittsverhältnisse von Eingangskanal (3,4), Ausgangskanal (5,6) und der oder den Nebenleitungen (7) so gewählt sind, daß sich im unbeladenen Zustand des Filterkörpers (1) eine Rückströmung in der bzw. den Nebenleitungen (7) einstellt, während ab einem vorgewählten Beladungszustand des Filterkörpers (1) eine Bypass-Strömung erfolgt.

2. Abgasfilter nach Anspruch 1,
**dadurch gekennzeichnet,** daß der Filterkörper (1) aus einem Gewebe, Geflecht oder Gewirk von miteinander versinterten Metallfasern und/oder Metallpulver gebildet ist, wobei in dem Filterkörper eine Vielzahl von Einlaßkanälen und Auslaßkanälen mit dazwischenliegenden Filterflächen gebildet ist.

3. Abgasfilter nach Anspruch 1,
**dadurch gekennzeichnet**, daß der Eingangskanal (3,4) mit einem Diffusor (4) versehen ist.

4. Abgasfilter nach Anspruch 1, 2 oder 3,
**dadurch gekennzeichnet**, daß sich der Ausgangskanal (5) düsenförmig zu einem Auslaß (6) verjüngt.

5. Abgasfilter nach einem der Ansprüche 1 - 4,
**dadurch gekennzeichnet,** daß sich die Öffnungen (8) der Nebenleitung (7) im Bereich des Beginnes des Diffusors (4) und die Öffnung (9) im Bereich der größeren Öffnungsweite des düsenförmigen Ausgangskanales (5) befindet.

6. Abgasfilter nach einem der Ansprüche 1 - 5,
**dadurch gekennzeichnet,** daß der oder die Nebenleitungen (7) zwischen dem Filterkörper (1) und dem diesen umgebenden Gehäuse (2) angeordnet sind.

7. Abgasfilter nach einem der Ansprüche 1 - 5,
**dadurch gekennzeichnet,** daß mehrere Nebenleitungen (7) auf Abstand voneinander über den Umfang des Filterkörpers (1) verteilt angeordnet sind.

8. Abgasfilter nach Anspruch 6,
**dadurch gekennzeichnet,** daß die Nebenleitung (7) als Ringleitung zwischen dem Filterkörper (1) und dem diesen umgebenden Gehäuse (2) ausgebildet ist bzw. einen Teil des Gehäuses (2) bildet.

9. Abgasfilter nach einem der Ansprüche 1 - 8,
**dadurch gekennzeichnet,** daß die Öffnungsweite der Öffnungen (8,9) in die Nebenleitung (7) einstellbar sind.

## Claims

1. Exhaust filter, especially soot filter for a diesel engine, comprising a filter body (1) arranged in a housing (2) and traversed by the exhaust gases to be cleaned, comprising an inlet channel (3, 4) and an outlet channel (5, 6), one or more auxiliary ducts (7) passing the filter body (1) being arranged between the inlet channel (3, 4) and the outlet channel (5, 6) and being connected at both ends via openings (8, 9) to the inlet channel (3, 4) or outlet channel (5, 6), characterised in that the auxiliary ducts(s) (7) are designed as by-pass duct(s) in such a manner that the cross sectional ratios of the inlet channel (3, 4), the outlet channel (5, 6) and the auxiliary duct or ducts (7) are selected in such a manner that backflow is created in the auxiliary duct or ducts (7) when the filter body (1) is not loaded, whereas a by-pass flow is created when the filter body (1) is loaded to a preselected degree.

2. Exhaust filter according to claim 1, characterised in that the filter body (1) is formed of a woven fabric, mesh or knitted fabric of metal fibres and/or metal powder sintered together, a plurality of inlet channels and outlet channels with intermediate filter surfaces being formed in the filter body.

3. Exhaust filter according to claim 1, characterised in that the inlet channel (3, 4) is provided with a diffuser (4).

4. Exhaust filter according to claim 1, 2 or 3, characterised in that the outlet channel (5) tapers in the shape of a nozzle towards an outlet (6).

5. Exhaust filter according to one of claims 1 - 4, characterised in that the openings (8) of the auxiliary duct (7) are situated in the region of the beginning of the diffuser (4) and the opening (9) is situated in the region of the opening of the nozzle-shaped outlet channel (5) with the larger width.

6. Exhaust filter according to one of claims 1 - 5, characterised in that the auxiliary duct or ducts (7) are arranged between the filter body (1) and the housing (2) surrounding the latter.

7. Exhaust filter according to one of claims 1 - 5, characterised in that several auxiliary ducts (7) are distributed at a distance from one another over the circumference of the filter body (1).

8. Exhaust filter according to claim 6, characterised in that the auxiliary duct (7) is designed as an annular duct between the filter body (1) and the housing (2) surrounding the latter or forms part of the housing (2).

9. Exhaust filter according to one of claims 1 - 8, characterised in that the widths of the openings (8, 9) into the auxiliary duct (7) are adjustable.

## Revendications

1. Filtre à gaz d'échappement, notamment filtre à suie pour un moteur diesel, comportant un corps filtrant (1) disposé dans un boîtier (2) et traversé par les gaz à épurer, un canal d'entrée (3, 4) et un canal de sortie (5, 6), un ou plusieurs conduits latéraux (7) étant disposés entre le canal d'entrée (3, 4) et le canal de sortie (5, 6) à côté du corps filtrant (1) et reliés au canal d'entrée (3, 4) et au canal de sortie (5, 6) par des orifices (8, 9) situés respectivement à leurs deux extrémités,
**caractérisé** en ce que le ou les conduits latéraux (7) sont agencés en conduit(s) de dérivation où les rapports des sections transversales du canal d'entrée (3, 4), du canal de sortie (5, 6) et du ou des conduits latéraux (7) sont choisis de telle façon que, dans un état non chargé du corps filtrant (1), un écoulement de retour s'établit dans le ou les conduits latéraux (7), tandis qu'un écoulement de dérivation s'établit à partir d'un état de charge prédéterminé du corps filtrant (1).

2. Filtre selon la revendication 1, **caractérisé** en ce que le corps filtrant (1) est formé par un tissu, un entrelacs ou un tricot de fibres et/ou poudres métalliques liées ensemble par frittage, de sorte que le corps filtrant contient un grand nombre de canaux d'admission et de canaux d'échappement entre lesquels se trouvent des surfaces filtrantes .

3. Filtre selon la revendication 1, **caractérisé** en ce que le canal d'entrée (3, 4) est pourvu d'un diffuseur (4).

4. Filtre selon la revendication 1, 2 ou 3, **caractérisé** en ce que le canal de sortie (5) se rétrécit en forme de buse jusqu' à un échappement (6).

5. Filtre selon l'une des revendications 1 à 4, **caractérisé** en ce que les orifices (8) du conduit latéral (7) se trouvent dans la zone du début du diffuseur (4) et l'orifice (9) se trouve dans la zone de la section maximale du canal de sortie (5) en forme de buse.

6. Filtre selon l'une des revendications 1 à 5, **caractérisé** en ce que le ou les conduits latéraux (7) sont disposés entre le corps filtrant (1) et le boîtier (2) entourant celui-ci.

7. Filtre selon l'une des revendications 1 à 5, **caractérisé** en ce que plusieurs conduits latéraux (7) sont répartis à distance les uns des autres sur le pourtour du corps filtrant (1).

8. Filtre selon la revendication 6, **caractérisé** en ce que le conduit latéral (7) est formé par un conduit annulaire entre le corps filtrant (1) et le boîtier (2) entourant celui-ci, ou forme une partie du boîtier (2).

9. Filtre selon l'une des revendications 1 à 8, **caractérisé** en ce que la section des orifices (8, 9) des conduits latéraux (7) est réglable.
